# EUROPÄISCHE PATENTSCHRIFT

(11) **EP 4 230 881 B1**
(45) Veröffentlichungstag und Bekanntmachung des Hinweises auf die Patenterteilung: **21.01.2026**
(21) Anmeldenummer: 23157297.5
(22) Anmeldetag: 17.02.2023
(51) Int. Cl.: F16B 7/04, F16B 21/08

(54) **VERBINDUNGSELEMENT**
CONNECTING ELEMENT
ELÉMENT DE LIAISON

(30) Priorität: 21.02.2022 DE 202022100969 U
(43) Veröffentlichungstag der Anmeldung: 23.08.2023
(73) Patentinhaber: SIGN-WARE GmbH & Co. KG, 59846 Sundern (DE)
(72) Erfinder: Vollmer, Gerd, 59846 Sundern (DE); Geuecke, Thomas, 59846 Sundern (DE); Teriet, Carsten, 59759 Arnsberg (DE); Klinke, Stefan, 59846 Sundern (DE)
(74) Vertreter: Patentanwälte Dörner & Kötter PartG mbB

(56) Entgegenhaltungen:
- EP-B1- 2 549 050
- DE-A1- 102005 048 111
- DE-A1- 102015 109 869
- DE-A1- 102018 132 064
- DE-A1- 19 522 505
- DE-A1- 3 408 600
- DE-C1- 19 806 922
- DE-U1- 8 816 799
- GB-A- 2 321 924
- US-A- 3 321 223

## Beschreibung

Die Erfindung betrifft ein Verbindungselement zur werkzeuglosen Verbindung von zwei gekammerten Profilen zur Herstellung eines Rahmens, umfassend zwei miteinander verbundene Schenkel zum Einschieben in jeweils eine Kammer der zu verbindenden Profile.

Aus gekammerten Rahmenprofilen werden Rahmenkonstruktionen zum Aufspannen von bedruckten Textilien, Folien oder dergleichen erstellt. Anwendung finden solche Rahmenkonstruktionen beispielsweise im Messebau oder auch zur Ausbildung mobiler Trenn- oder Präsentationswände. Dabei erfolgt die Verbindung der Rahmenprofile, die zur Ausbildung einer an ihren zueinander weisenden Stirnseiten auf Gehrung geschnitten sind, durch ein Verbindungsmittel, das üblicherweise ein als Winkelstück ausgeführter Eckverbinder mit zwei Schenkeln ist, wobei jeder Schenkel in eine Verbindungskammer eines Rahmenprofiles eingreift und darin beispielsweise mittels Madenschrauben verspannt wird. Bei der Verbindungskammer handelt es sich regelmäßig um eine in Längsrichtung des Rahmenprofils verlaufende, hinterschnittene Nut. Genutzt wird diese Nut auch zum Anbringen von Gegenständen, die mit Hilfe von in dieser Nut verspannten Kulissensteinen gehalten sind.

Eine weitere bekannte Lösung zur Verbindung der Rahmenprofile besteht in der Anordnung von Eckstücken, die zwischen die beiden an der Profileckausbildung beteiligten Rahmenprofile eingesetzt werden. Bei diesen Eckstücken handelt es sich typischerweise um Eckprofilteile, die stirnseitig an die beiden an der Profileckausbildung beteiligten Rahmenprofile mit Hilfe von zwei geraden Profilverbindern angeschlossen sind. Diese Profilverbinder greifen in jeweils eine Verbindungskammer der angeschlossenen Rahmenprofile bzw. Rahmenprofilabschnitte ein und werden darin mittels Schrauben festgesetzt.

Zur Verbindung von zwei hintereinander in Flucht angeordneten Rahmenprofilen kommt ebenfalls ein Zwischenstück zum Einsatz, das entsprechend über gerade Profilverbinder, die jeweils in eine Verbindungskammer der angeschlossenen Rahmenprofile eingreifen und dort mittels Schrauben festgesetzt werden, angeschlossen wird.

Nachteilig an den bekannten Verbindungselementen ist, dass diese aufwändig mittels vorzuhaltender Werkzeuge zu montieren sind. Zudem kann es durch Überdrehen der Befestigungsschrauben zu Beschädigungen an dem Rahmenprofil kommen.

In der DE 195 22 505 A1 ist ein Linearverbinder aus Kunststoff zur Verbindung von hohlen Abstandhalterprofilen von Mehrscheibenisoliergläsern offenbart. Hier will die Erfindung Abhilfe schaffen. Der Erfindung liegt die Aufgabe zugrunde, ein Verbindungselement zur werkzeuglosen Verbindung von zwei gekammerten Rahmenprofilen zur Herstellung eines Rahmens bereitzustellen, das einfach und ohne das Erfordernis von Werkzeugen montierbar ist und bei denen Beschädigungen der Rahmenprofile vermieden sind. Gemäß der Erfindung wird diese Aufgabe durch ein Verbindungselement mit den Merkmalen des kennzeichnenden Teils des Patentanspruchs 1 gelöst.

Mit der Erfindung ist ein Verbindungselement zur werkzeuglosen Verbindung von zwei gekammerten Rahmenprofilen zur Herstellung eines Rahmens bereitgestellt, das einfach und ohne das Erfordernis von Werkzeugen montierbar ist und bei denen Beschädigungen der Rahmenprofile vermieden sind. Dadurch, dass die beiden Schenkel jeweils an zwei gegenüberliegenden Seitenwänden mit elastischen Flügeln versehen sind, die in die dem freien Ende des Schenkels entgegengesetzte Richtung sich erstreckend winklig an diesen angestellt sind, ist eine kraftschlüssige Verbindung mit dem Rahmenprofil nach Einschieben in dessen Verbindungskammer bewirkt. Dabei werden die elastischen Flügel beim Einschieben in die Verbindungskammer gegen den Schenkel gedrückt, wodurch die Verschiebebewegung nicht beeinträchtigt ist. Beim Herausziehen des Schenkels ist durch die elastischen Flügel hingegen eine Sperrwirkung bewirkt, da diese hierdurch gegen die Innenwandung der Verbindungskammer gepresst werden und in Art eines Widerhakens wirken. Darüber hinaus sind die elastisch sich gegen die Wandung der Verbindungskammer anlegenden Flügel unempfindlich gegenüber Maßtoleranzen.

In Weiterbildung der Erfindung sind die an den beiden Seitenwänden befindlichen elastischen Flügel jeweils gegenüberliegend zueinander angeordnet und in Art eines V zueinander angestellt. Hierdurch ist die Klemmwirkung der Flügel erhöht.

In Ausgestaltung der Erfindung ragen die elastischen Flügel an einer Seite des jeweiligen Schenkels zumindest bereichsweise über dessen Deckfläche oder eine unterhalb der Deckfläche seitlich neben dieser angeordnete Anlagefläche hinaus. Hierdurch ist eine zusätzliche Klemmwirkung orthogonal zu den Flügeln erzielt. Der Schenkel ist so spielfrei in allen Richtungen in der Verbindungskammer fixierbar.

In weiterer Ausgestaltung der Erfindung sind die Schenkel gleich lang ausgebildet. Hierdurch ist eine identische Haltekraft in den Verbindungskammern der zu verbindenden Rahmenprofile gewährleistet.

In einer - nicht beanspruchten - Ausgestaltung-sind die beiden Schenkel derart miteinander verbunden, dass ihre Deckflächen auf einer gemeinsamen Ebene angeordnet sind. Hierdurch ist eine Verbindung zweier Profile in einer X-Y-Ebene ermöglicht.

Beim Gegenstand der Erfindung sind die Schenkel derart miteinander verbunden, dass ihre Deckflächen lotrecht zueinander angeordnet sind, sodass ein winkliges Bauteil gebildet ist. Hierdurch ist eine Verbindung zweier Profile in einer X-Z-Ebene ermöglicht.

In einer - nicht beanspruchten - Ausgestaltung sind die beiden Schenkel fluchtend miteinander zu einem geraden Bauteil sich ergänzend miteinander verbunden. Hierdurch ist eine direkte Verbindung zweier hintereinander angeordneter Rahmenprofile ermöglicht. Die Anordnung eines Zwischenstücks ist nicht erforderlich.

Dabei kann im Verbindungsbereich der beiden Schenkel zwischen deren Flügelanordnungen an den gegenüberliegenden Seitenwänden jeweils eine sich in Längsrichtung erstreckende Halterippe angeordnet sein, die in Art einer Trapezpyramide endseitig jeweils in eine Rampe übergeht. Hierdurch ist ein stabiler Halt im Bereich des Stoßes der beiden zu verbindenden Rahmenprofile erzielt. Durch die Rampen ist ein einfaches Einfädeln der Halterippe in die Verbindungskammer eines Rahmenprofils gewährleistet.

Dabei können die Halterippen versetzt zueinander angeordnet sein. Hierdurch ist durch den jeweils im Anschluss an eine Halterippe folgende in die entgegengesetzte Richtung ausgerichteten elastischen Flügel ein Anschlag gebildet, wodurch ein unbeabsichtigtes Einschieben des Verbindungselementes in den Verbindungskanal eines Rahmenprofils vermieden ist.

Beim Gegenstand der Erfindung ist im Verbindungsbereich der beiden Schenkel zwischen deren Flügelanordnungen an beiden Seitenwänden jeweils eine sich über den Winkel des Bauteils erstreckende Halterippe angeordnet, die endseitig jeweils in eine Rampe übergeht. Hierdurch ist ein stabiler Halt im Bereich des Stoßes der zu verbindenden, auf Gehrung geschnittenen Rahmenprofile erzielt. Zudem ist durch die Halterippe die Stabilität des Verbindungselementes im dem abgewinkelten Bereich erhöht.

Der Erfindung liegt weiterhin die Aufgabe zugrunde, einen Profilrahmen mit wenigstens vier gekammerten Rahmenprofilen bereitzustellen, der einfach und ohne das Erfordernis von Werkzeugen und beschädigungsfrei montierbar ist. Gemäß der Erfindung wird diese Aufgabe durch einen Profilrahmen mit den Merkmalen des kennzeichnenden Teils des Patentanspruchs 5 gelöst.

In Ausgestaltung der Erfindung ist zwischen zwei gegenüberliegend angeordneten Rahmenprofilen, dessen Verbindungskammern jeweils einen Längsspalt aufweisen, ein Zwischenprofil angeordnet, das an seinen beiden Enden mit einem Verbindungsstück versehen ist, das einen Hammerkopf aufweist, der in die Verbindungskammer jeweils eines Rahmenprofils durch dessen Längsspalt hindurch klemmend eingedreht ist. Hierdurch ist die Stabilität des Rahmens erhöht. Durch das einen Hammerkopf aufweisende Verbindungsstück ist eine werkzeuglose Befestigung des Zwischenprofils ermöglicht. Zur Montage wird der Hammerkopf des Verbindungsstücks lediglich durch den Längsschlitz der Verbindungskammer des anliegenden Rahmenprofils eingeführt und sodann um 90 Grad verdreht, wodurch eine kraftschlüssige Verbindung erzielt ist.

In weiterer Ausgestaltung der Erfindung ist der Hammerkopf des Verbindungsstücks im Wesentlichen rautenförmig ausgebildet. Hierdurch sind an seiner der Deckplatte des Verbindungsstücks zugewandten Seite an dem Hammerkopf schräg ansteigende Flächen gebildet, durch die beim Verdrehen des in die Verbindungskammer eines Rahmenprofils eingebrachten Hammerkopfes die Deckplatte und damit das Zwischenprofil an das Rahmenprofil herangezogen wird, wodurch eine feste Verbindung zwischen Rahmenprofil und Zwischenprofil bewirkt ist. Die Angabe "rautenförmig" ist hier etwas ungenau, da es sich bei dem Hammerkopf um ein dreidimensionales Objekt handelt. Gemeint ist ein Körper mit zwei rautenförmigen Deckflächen, die über eine orthogonal zu diesen angestellte Mantelfläche miteinander verbunden sind. In der Geometrie wird ein solcher Körper auch als Rhomboeder bezeichnet.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschreiben. Es zeigen:
- Figur 1: die schematische Darstellung eines - nicht zur beanspruchten Erfindung gehörenden - geraden Verbindungselements;
- Figur 2: die schematische räumliche Darstellung der Verbindung zweier Rahmenprofile mit dem Verbindungselement aus Figur 1;
- Figur 3: die Darstellung der Anordnung aus Figur 2 (ohne zweites Verbindungsprofil)
a) in der Ansicht von vorne;
b) in der Draufsicht;
c) in der Seitenansicht;
- Figur 4: die schematische Detaildarstellung des in die Verbindungskammer eines Rahmenprofils eingebrachten Verbindungselements aus Figur 1;
- Figur 5: die schematische Darstellung eines erfindungsgemäßen in der X-Y-Ebene abgewinkelten Verbindungselements;
- Figur 6: die schematische Darstellung der Verbindung zweier Rahmenprofile mit dem Verbindungselement aus Figur 5;
- Figur 7: die Darstellung der Anordnung aus Figur 6
a) in der Seitenansicht;
b) in der Ansicht von vorne;
c) in der Draufsicht;
- Figur 8: die schematische Darstellung eines erfindungsgemäßen in der X-Z-Ebene abgewinkelten Verbindungselements;
- Figur 9: die schematische Darstellung der Verbindung zweier Rahmenprofile mit dem Verbindungselement aus Figur 8;
- Figur 10: die Darstellung der Anordnung aus Figur 9
a) in der Seitenansicht;
b) in der Ansicht von vorne;
c) in der Draufsicht;
- Figur 11: die schematische Darstellung eines Profilrahmens;
- Figur 12: die Darstellung des Profilrahmens aus Figur 11 in Explosionsdarstellung
- Figur 13: die Detaildarstellung der Verbindung eines Zwischenprofils mit einem Rahmenprofil des Profilrahmens aus Figur 11;
- Figur 14: die Detaildarstellung der Verbindung eines weiteren Zwischenprofils mit einem Rahmenprofil des Profilrahmens aus Figur 11 in einer weiteren Ausführungsform;
- Figur 15: die räumliche Darstellung eines Verbindungsstücks eines Zwischenprofils des Profilrahmens aus Figur 11.

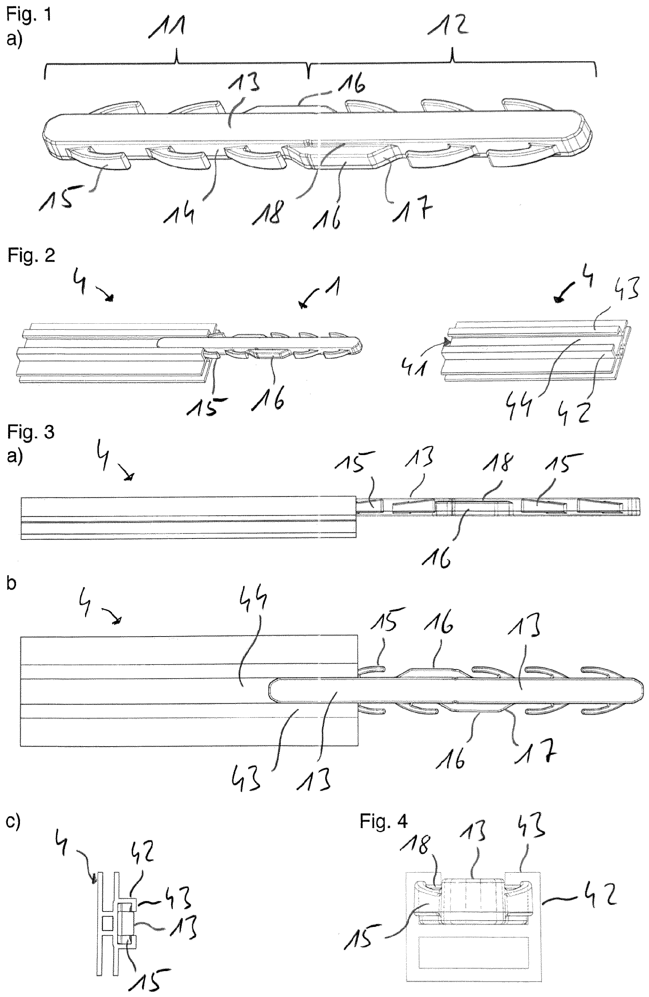

Das - nicht unter die beanspruchte Erfindung fallende - Verbindungselement 1 gemäß Figur 1 umfasst einen ersten Schenkel 11 zum Einbringen in die Verbindungskammer 41 eines ersten Rahmenprofils 4 und einen zweiten Schenkel 12 zum Einbringen in die Verbindungskammer 41 eines zweiten, identisch ausgebildeten Rahmenprofils 4. Die beiden Schenkel 11, 12 sind hintereinander angeordnet zueinander fluchtend einteilig miteinander verbunden und stellen Funktionsabschnitte des Verbindungselements dar. Im Ausführungsbeispiel ist das Verbindungselement 1 als Kunststoffspritzgussteil hergestellt.

Der erste Schenkel 11 weist an einer ersten Seitenwand 14 drei und an der gegenüberliegenden Seitenwand 14 zwei beabstandet zueinander angeordnete elastische Flügel 15 auf, die in Richtung des zweiten Schenkels 12 sich erstreckend winklig an die Seitenwand 14 angestellt sind. Der zweite Schenkel 12 weist an der ersten Seitenwand 14 zwei und an der gegenüberliegenden Seitenwand 14 drei beabstandet zueinander angeordnete elastische Flügel 15 auf, die in Richtung des ersten Schenkels 11 sich erstreckend winklig an die Seitenwand angestellt sind. Zwischen den elastischen Flügeln 15 des ersten Schenkels 11 und des zweiten Schenkels 12 ist an die erste Seitenwand 14 sowie an die gegenüberliegende Seitenwand 14 jeweils eine Halterippe 16 in Form einer sich in Längsrichtung erstreckenden Trapezpyramide angeordnet, die endseitig jeweils eine in Form einer schrägen Fläche ausgebildete Rampe 17 aufweist und die sich bis unterhalb der Deckfläche 13 erstrecken, wodurch seitlich an den Schenkeln 11, 12 Absätze 18 gebildet sind, die jeweils eine unterhalb der Deckfläche 13 seitlich neben dieser angeordnete Anlagefläche ausbilden. Die Halterippen 16 der beiden Seitenwände 14 sind versetzt zueinander angeordnet.

Die elastischen Flügel 15 der beiden Seitenwände 14 sind jeweils gegenüberliegend angeordnet, wobei jeweils zwei gegenüberliegende elastische Flügel 15 eine sich in Richtung der Halterippen 16 erweiternde V-Form ausbilden. Die elastischen Flügel 15 weisen eine sich in Richtung der Deckfläche 13 des Verbindungselements 1 verbreiternde Form auf, die endseitig über die Ebene des Absatzes 18 der Halterippe 16 hinausragt. Die Deckfläche 13 ist die Fläche der Oberseite des Verbindungsteils, die nach dem Einschieben in die Verbindungskammer 41 eines Rahmenprofils 4 an dessen Innenseite liegt. Die der Innenseite gegenüberliegende Außenseite eines Rahmenprofils 1 ist regelmäßig eben ausgebildet und bildet in montiertem Zustand eine Außenfläche eines mit weiteren Rahmenprofilen gebildeten Rahmens aus.

In Figur 2 ist schematisch die Verbindung von zwei Rahmenprofilen 4 durch das Verbindungselement 1 dargestellt. Bei den Rahmenprofilen 4 handelt es sich um gekammerte Strangpressprofile, die im Ausführungsbeispiel aus einem Aluminiumwerkstoff hergestellt sind. Die Rahmenprofile 4 weisen eine sich in Längsrichtung erstreckende Verbindungskammer 41 mit rechteckigem Querschnitt auf, die durch einen C-förmigen Profilabschnitt 42 gebildet ist, dessen Deckleisten 43 einen Längsspalt 44 begrenzen. Die Breite des Längsspaltes 44 entspricht im Ausführungsbeispiel der Breite der Schenkel 11, 12.

In Figur 2 ist das Verbindungselement 1 bereichsweise mit seinem ersten Schenkel 11 in die Verbindungskammer 41 eines der beiden Rahmenprofile 4 eingeführt. Hierbei ragt er mit seiner Deckfläche 13 in den Längsspalt 44 hinein, wobei die elastischen Flügel 15 sowie die Halterippen 16 in den Hinterschnitten des C-Profilabschnitts 41 eingreifen. Die den Längsspalt 44 begrenzenden Deckleisten 43 liegen dabei auf dem Absatz 18 der Halterippen 16 auf. Die elastischen Flügel 15 sind dabei gegen die beiden Seitenwände der Verbindungskammer 41 vorgespannt. Dadurch, dass die elastischen Flügel 15, die über ihre Länge in Richtung der Deckfläche sich verbreiternd ausgebildet sind endseitig über die Ebene des Absatzes 18 der Halterippe 16 hinausragen, sind sie in eingeschobener Position zusätzlich auch gegen die den Längsspalt 44 begrenzenden Deckleisten 43 vorgespannt. In Figur 4 sind die Übermaße der elastischen Flügel 15 über die Innenmaße der Verbindungskammer 41 schematisch gezeigt, durch welche Vorspannkräfte gegen die Innenwandung der Verbindungskammer 41 bewirkt sind.

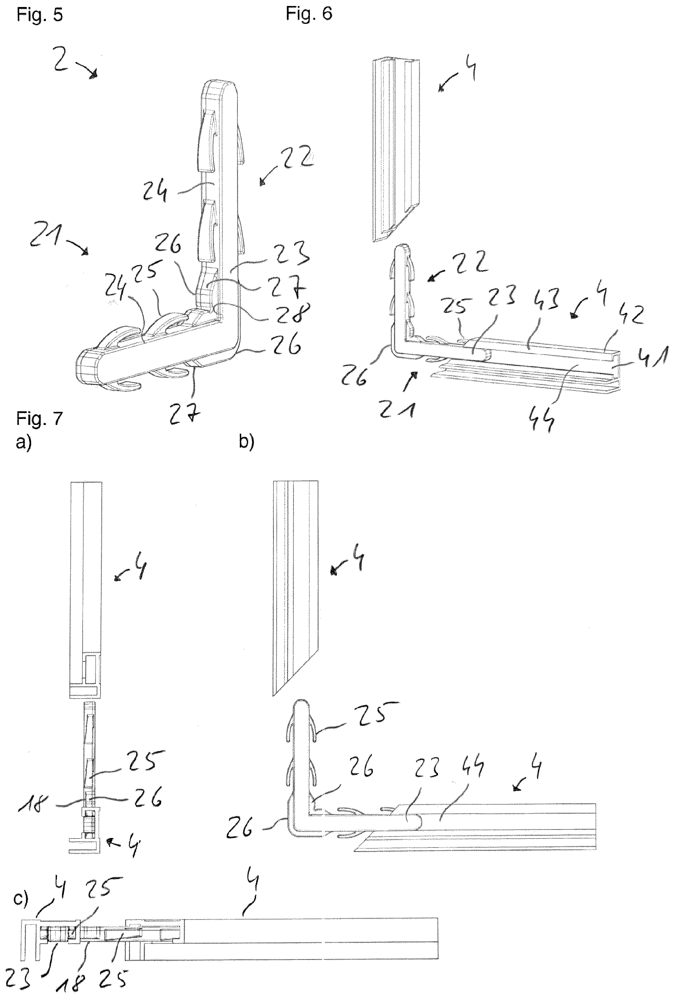

Im zur beanspruchten Erfindung gehörenden Ausführungsbeispiel gemäß Figur 5 sind die beiden Schenkel 21, 22 des Verbindungselements 2 endseitig in einer X-Y-Ebene rechtwinklig zueinander angestellt miteinander verbunden, wodurch ein einstückiges Winkelteil gebildet ist. Die Schenkel 21, 22 sind wiederum mit elastischen Flügeln 25 versehen, die in Richtung des jeweils anderen Schenkels 21, 22 sich erstreckend winklig an die Seitenwände 24 angestellt sind. Die elastischen Flügel 25 der beiden Seitenwände 24 sind wiederum jeweils gegenüberliegend angeordnet, wobei jeweils zwei gegenüberliegende elastische Flügel 25 eine sich in Richtung des jeweils anderen Schenkels 21, 22 erweiternde V-Form ausbilden.

Zwischen den elastischen Flügeln 25 des ersten Schenkels 21 und des zweiten Schenkels 22 ist im Bereich des abgewinkelten Übergangs der beiden Schenkel 21, 22 die beiden Seitenwände 24 jeweils den abgewinkelten Abschnitt einrahmend eine Halterippe 26 angeordnet, die endseitig jeweils eine Rampe 27 aufweist. Die beiden Halterippen 26 erstrecken sich bis unterhalb der Deckfläche 23, wodurch wiederum ein Absatz 28 gebildet ist. Die elastischen Flügel 25 weisen wiederum eine sich in Richtung der Deckfläche 23 des Verbindungselements 2 verbreiternde Form auf, die endseitig über die Ebene des Absatzes 28 der Halterippe 26 hinausragt.

In Figur 6 ist das Verbindungselement 2 bereichsweise mit seinem ersten Schenkel 21 in die Verbindungskammer 41 eines der beiden Rahmenprofile 4 eingeführt. Hierbei ragt er entsprechend den obigen Ausführungen zu Figur 2 mit seiner Deckfläche 23 in den Längsspalt 44 hinein, wobei die elastischen Flügel 25 sowie die Halterippen 26 in den Hinterschnitten des C-Profilabschnitts 41 eingreifen. Die den Längsspalt 44 begrenzenden Deckleisten 43 der beiden auf Gehrung abgelängten Rahmenprofile 4 liegen dabei im Bereich des abgewinkelten Abschnitts auf dem Absatz 28 der Halterippen 26 auf. Die elastischen Flügel 25 sind hier ebenfalls, wie oben beschrieben, gegen die beiden Seitenwände der Verbindungskammer 41 sowie gegen die den Längsspalt 44 begrenzenden Deckleisten 43 vorgespannt.

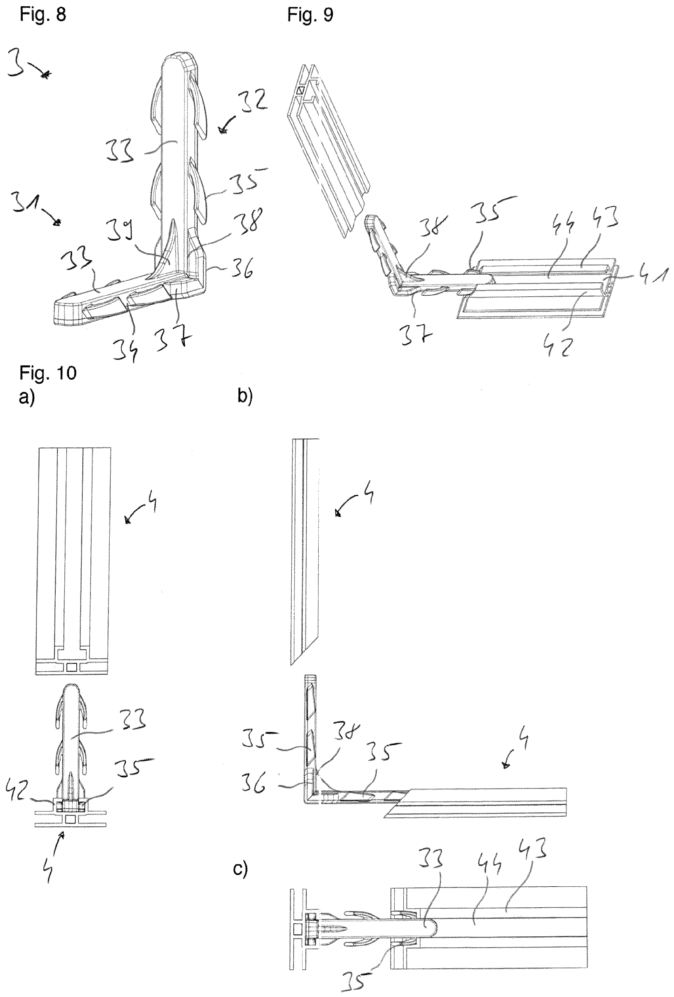

Das Verbindungselement 3 des ebenfalls zur beanspruchten Erfindung gehörenden Ausführungsbeispiels gemäß Figur 8 entspricht im Wesentlichen dem zuvor beschriebenen Verbindungselement nach Figur 5, wobei die beiden im Übrigen in gleicher Weise ausgebildeten Schenkel 31, 32 des Verbindungselements 3 mit an ihren Seitenwänden 34 angeordneten elastischen Flügeln 35 jedoch in einer X-Z-Ebene endseitig rechtwinklig zueinander angestellt miteinander verbunden sind. Auch hier ist wiederum ein einstückiges Winkelteil gebildet. Zur Erhöhung der Stabilität ist der winklige Abschnitt im Bereich der Halterippen 36 innen mit einer Stützrippe 39 versehen, über welche die beiden Schenkel 31, 32 miteinander verbunden sind. Die Halterippen 36 weisen wiederum endseitig eine Rampe 37 auf und erstrecken sich bis unterhalb der Deckfläche 33, wodurch wiederum ein Absatz 38 gebildet ist.

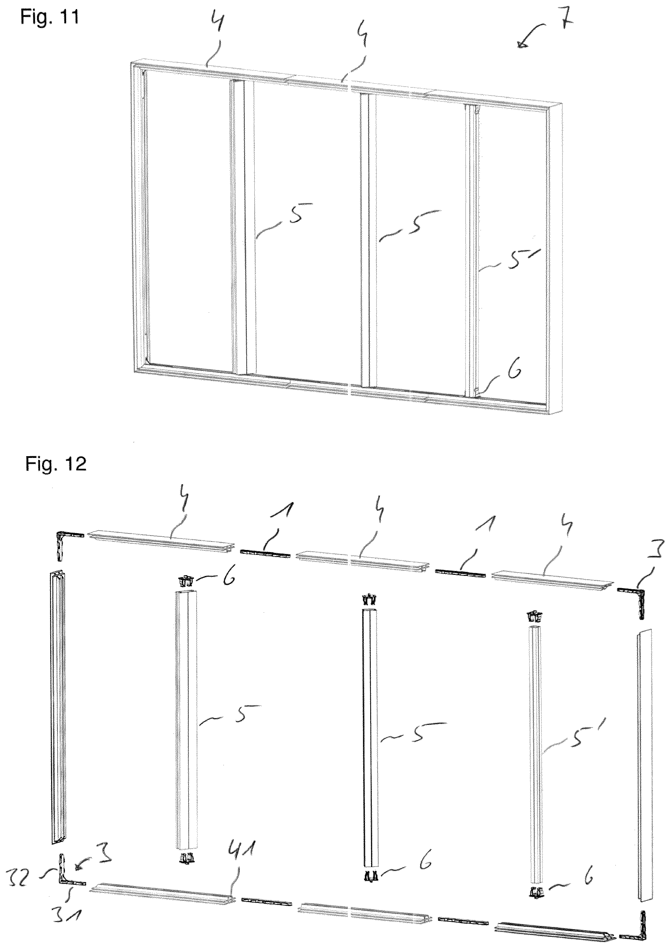

In Figur 11 ist ein aus Rahmenprofilen 4 gebildeter Profilrahmen 7 gezeigt. Die horizontal angeordneten Rahmenprofile 4 sind über gerade Verbindungselemente 1 gemäß dem ersten Ausführungsbeispiel zu Figur 1 verbunden, wobei die Schenkel 11, 12 jeweils in eine Verbindungskammer 41 eines Rahmenprofils 4 eingeschoben ist, wobei durch die elastischen Flügel 15 wie oben beschrieben eine spielfreie, kraftschlüssige Verbindung erzielt ist. Die äußeren vertikal angeordneten Rahmenprofile 4 sind analog über in einer X-Z-Ebene abgewinkelte Verbindungselemente 3 entsprechend dem dritten Ausführungsbeispiel zu Figur 8 verbunden.

Die horizontal angeordneten Rahmenprofile 4 sind darüber hinaus jeweils über zwei Zwischenprofile 5 mit Rechteckquerschnitt und ein Zwischenprofil 5' mit quadratischem Querschnitt mit dem jeweils gegenüberliegenden Rahmenprofil 4 verbunden. Endseitig sind die Zwischenprofile 5, 5' jeweils mit einem Verbindungsstück 6 versehen. Das Verbindungsstück 6 umfasst eine rechteckförmige Deckplatte 61, die auf einer Seite mittig einen Hammerkopf 62 aufweist. Im Ausführungsbeispiel ist der Hammerkopf 62 im Wesentlichen rautenförmig bzw. exakter in Form eines Rhomboeders ausgebildet. Hierdurch sind an seiner der Deckplatte 61 des Verbindungsstücks 6 zugewandten Seite an dem Hammerkopf 62 schräg ansteigende Flächen 63 gebildet.

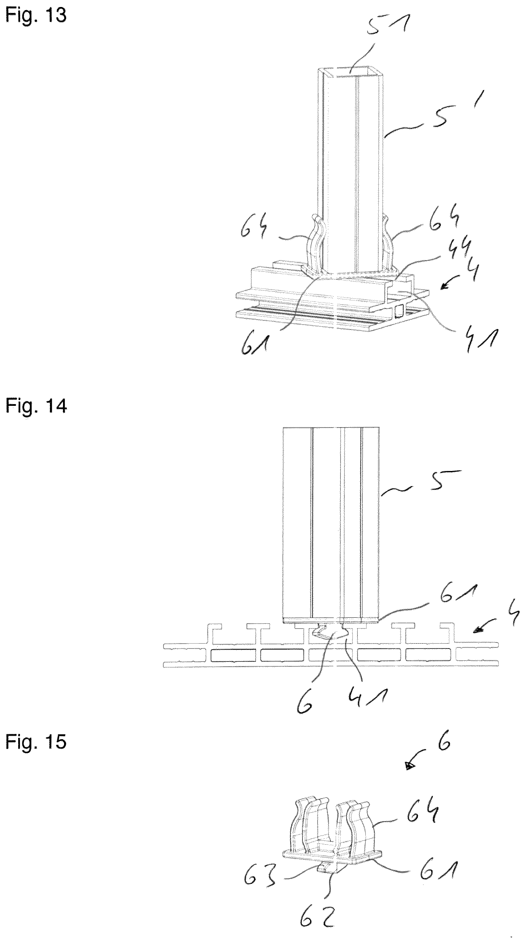

Auf ihrer dem Hammerkopf 62 gegenüberliegenden Seite weist die Decklatte 61 beabstandet zueinander vier paarweise gegeneinander angestellt angeordnete Klemmfederlaschen 64 auf, über die das Verbindungsstück 6 in das einen Rechteckquerschnitt aufweisende Zwischenprofil 5 eingesetzt ist. Hierbei ist das Verbindungsstück 6 mit allen Klemmfederlaschen 64 in die Hohlkammer 51 des Zwischenprofils 5 eingeführt, wobei es durch die beiden äußeren Klemmfederlaschen 64 in dem Zwischenprofil 5 klemmend gehalten ist (vgl. Figur 14).

Bei dem einen quadratischen Querschnitt aufweisenden Zwischenprofil 5' ist das Verbindungsstück 6 mit jeweils zwei Klemmfederlaschen 64 auf zwei gegenüberliegenden Seitenwänden des Zwischenprofils 5' aufgebracht, wobei die beiden gegenüberliegenden Seitenwände jeweils zwischen zwei Klemmfederlaschen 64 klemmend gehalten sind (vgl. Figur 13).

Der Zwischenprofile 5 sind jeweils endseitig mit dem Hammerkopf 62 des Verbindungsstücks 6 durch den Längsspalt 44 der Verbindungskammer 41 des anliegenden Rahmenprofils 4 eingeführt und sodann um 90 Grad verdreht. Dabei wird durch die schräg ansteigenden Flächen 63 des Hammerkopfes 62 die Deckplatte 61 und damit das Zwischenprofil 5, 5' an das Rahmenprofil 4 herangezogen, wodurch eine feste Verbindung zwischen Rahmenprofil 4 und Zwischenprofil 5, 5' bewirkt ist.

## Patentansprüche

1. Verbindungselement zur werkzeuglosen Verbindung von zwei gekammerten Rahmenprofilen zur Herstellung eines Rahmens, umfassend zwei miteinander verbundene Schenkel zum Einschieben in jeweils eine Verbindungskammer der zu verbindenden Rahmenprofile, wobei die beiden Schenkel ( 21, 22, 31, 32) jeweils an zwei gegenüberliegenden Seitenwänden (24, 34) mit elastischen Flügeln (25, 35) versehen sind, die in die dem freien Ende des Schenkels ( 21, 22, 31, 32) entgegengesetzte Richtung sich erstreckend winklig an diesen angestellt sind, **dadurch gekennzeichnet, dass** die beiden Schenkel (31, 32) derart miteinander verbunden sind, dass ihre Deckflächen (23, 33) lotrecht zueinander angeordnet sind, sodass ein winkliges Bauteil gebildet ist, wobei im Verbindungsbereich der beiden Schenkel (31, 32) zwischen deren Flügelanordnungen an beiden Seitenwänden (24, 34) jeweils eine sich über den Winkel des Bauteils erstreckende Halterippe (26, 36) angeordnet ist, die endseitig jeweils in eine Rampe (27, 37) übergeht.

2. Verbindungselement nach Anspruch 1, **dadurch gekennzeichnet, dass** die an den beiden Seitenwänden (24, 34) befindlichen elastischen Flügel (25, 35) jeweils gegenüberliegend zueinander angeordnet und in Art eines V zueinander angestellt sind.

3. Verbindungselement nach Anspruch 1 oder 2, **dadurch gekennzeichnet, dass** die elastischen Flügel (25, 35) an einer Seite des jeweiligen Schenkels ( 21, 22, 31, 32) zumindest bereichsweise über dessen Deckfläche (23, 33) oder eine unterhalb der Deckfläche (23, 33) seitlich neben dieser angeordnete Anlagefläche hinausragen.

4. Verbindungselement nach Anspruch 1 oder 2, **dadurch gekennzeichnet, dass** die beiden Schenkel ( 21, 22, 31, 32) gleich lang ausgebildet sind.

5. Profilrahmen, mit wenigstens vier gekammerten Rahmenprofilen (4), **dadurch gekennzeichnet, dass** wenigstens zwei gekammerte Rahmenprofile (4) mit einem Verbindungselement nach einem der vorgenannten Ansprüche miteinander verbunden sind, wobei jeweils ein Schenkel ( 21, 22, 31, 32) des Verbindungselements (1, 2, 3) in eine Verbindungskammer (41) eines Rahmenprofils (4) eingreift.

6. Profilrahmen nach Anspruch 5, **dadurch gekennzeichnet, dass** zwischen zwei gegenüberliegend angeordneten Rahmenprofilen (4), deren Verbindungskammern (41) jeweils einen Längsspalt (44) aufweisen, ein Zwischenprofil (5, 5') angeordnet ist, das an seinen beiden Enden mit einem Verbindungsstück (6) versehen ist, das einen Hammerkopf (62) aufweist, der in die Verbindungskammer (41) jeweils eines Rahmenprofils (4) durch dessen Längsspalt (44) hindurch klemmend eingedreht ist.

7. Profilrahmen nach Anspruch 6, **dadurch gekennzeichnet, dass** das Verbindungsstück (6) eine Deckplatte (61) umfasst, die den Hammerkopf (62) aufweist, wobei an der dem Hammerkopf (62) gegenüberliegenden Seite der Deckplatte (61) Klemmelemente angeordnet sind, über die sie in einer in dem Zwischenprofil (5, 5') angeordneten Hohlkammer (51) klemmend fixierbar ist.

8. Profilrahmen nach Anspruch 7, **dadurch gekennzeichnet, dass** der Hammerkopf (62) des Verbindungsstücks (6) im Wesentlichen rautenförmig ausgebildet ist.

## Claims

1. Connection element for tool-free connection of two chambered frame profiles for production of a frame, comprising two connected legs for insertion into one connection chamber each of the frame profiles to be connected, where the two legs (21, 22, 31, 32) are provided with elastic wings (25, 35) that are placed against the leg (21, 22, 31, 32) at an angle on two opposite side walls (24, 34) each and extend in the direction facing away from the free end of the leg, **characterised in that** the two legs (31, 32) are connected to each other so that their outer surfaces (23, 33) are aligned perpendicular to each other, so that an angled component is formed, where a holding rib (26, 36) that extends across the angle of the component and transitions into a ramp (27, 37) on each end side is arranged in the connection area of the two legs (31, 32) between the wing arrangements on each of the two lateral walls (24, 34).

2. Connection element according to claim 1, **characterised in that** the elastic wings (25, 35) located on the two lateral walls (24, 34) are each arranged facing each other and positioned towards each other in a "V" shape.

3. Connection element according to claim 1 or 2, **characterised in that** the elastic wings (25, 35) on one side of the respective leg (21, 22, 31, 32) protrude at least in some areas beyond its outer surface (23, 33) or beyond an application area arranged underneath the outer surface (23, 33) and laterally next to it.

4. Connection element according to claim 1 or 2, **characterised in that** the two legs (21, 22, 31, 32) are formed in the same length.

5. Profile frame with at least four chambered frame profiles (4), **characterised in that** at least two chambered frame profiles (4) are connected to a connection element according to one of the preceding claims, where one leg (21, 22, 31, 32) of the connection element (1, 2, 3) each engages in a connection chamber (41) of a frame profile (4).

6. Profile frame according to claim 5, **characterised in that** an intermediate profile (5, 5') is arranged between two frame profiles (4) arranged opposite each other, the connection chambers (41) of which each have a longitudinal gap (44), and is provided with a connection piece (6) on either end that has a hammer head (62) that is turned in a clamping manner into the connection chamber (41) of one frame profile (4) each through its longitudinal gap (44).

7. Profile frame according to claim 6, **characterised in that** the connection piece (6) comprises a cover plate (61) that has a hammer head (62) where clamping elements that can be used for clamped fixing in a hollow chamber (51) arranged in the intermediate profile (5, 5') are arranged on the side of the cover plate (61) opposite the hammer head (62).

8. Profile frame according to claim 7, **characterised in that** the hammer head (62) of the connection piece (6) is essentially formed diamond-shaped.

## Revendications

1. Élément de liaison pour établir la liaison sans outil entre deux profilés de cadre compartimentés afin de fabriquer un cadre, comprenant deux branches reliées entre elles à insérer respectivement dans un compartiment de liaison des profilés de cadre à relier, sachant que les deux branches (21, 22, 31, 32) sont respectivement munies, sur deux parois latérales (24, 34) se faisant face, d'ailettes élastiques (25, 35) qui, en direction opposée à l'extrémité libre de la branche (21, 22, 31, 32), s'étendent appliquées coudées contre cette dernière, **caractérisé en ce que** les deux branches (31, 32) sont reliées entre elles de sorte que leurs surfaces de recouvrement (23, 33) sont disposées à l'aplomb l'une de l'autre afin de former un élément de construction coudé, sachant que dans la zone de liaison des deux branches (31, 32) entre leurs agencements en vantail, contre les deux parois latérales (24, 34), est disposée respectivement une nervure de retenue (26, 36) s'étendant sur l'angle de l'élément de construction, nervure qui à l'extrémité respective devient une rampe (27, 37).

2. Élément de liaison selon la revendication 1, **caractérisé en ce que** les ailettes élastiques (25, 35) situées contre les deux parois latérales (24, 34) sont disposées se faisant réciproquement face et en applique réciproque pour former une sorte de « V ».

3. Élément de liaison selon la revendication 1 ou 2, **caractérisé en ce que** les ailettes élastiques (25, 35) font saillie sur un côté de la branche respective (21, 22, 31, 32) au moins localement au-dessus de sa surface de recouvrement (23, 33) ou au-dessus d'une surface d'applique située en dessous de la surface de recouvrement (23, 33) latéralement à côté de celle-ci.

4. Élément de liaison selon la revendication 1 ou 2, **caractérisé en ce que** les deux branches (21, 22, 31, 32) sont configurées de longueur identique.

5. Cadre profilé comprenant au moins quatre profilés de cadre (4) compartimentés, **caractérisé en ce qu'**au moins deux profilés de cadre compartimentés (4) sont reliés ensemble avec un élément de liaison selon l'une des revendications précédentes, sachant que respectivement une branche (21, 22, 31, 32) de l'élément de liaison (1, 2, 3) engrène dans un compartiment de liaison (41) d'un profilé de cadre (4).

6. Cadre profilé selon la revendication 5, **caractérisé en ce qu'**entre deux profilés de cadre (4) disposés se faisant réciproquement face dont les compartiments de liaison (41) présentent respectivement une fente longitudinale (44), est disposé un profilé intermédiaire (5, 5') qui en ses deux extrémités est muni d'une pièce de liaison (6) présentant une tête en forme de marteau (62) qui est vissée dans le compartiment de liaison (41) respectivement d'un profilé de cadre (4) pour brider ce dernier en traversant sa fente longitudinale (44).

7. Cadre profilé selon la revendication 6, **caractérisé en ce que** la pièce de liaison (6) comprend une plaque couvercle (61) présentant la tête en forme de marteau (62), sachant que sur le côté de la plaque couvercle (61) situé en face de la tête en forme de marteau (62) sont disposés des éléments de bridage via lesquels il est possible de l'immobiliser pour brider dans un compartiment creux (51) disposé dans le profilé intermédiaire (5, 5').

8. Cadre profilé selon la revendication 7, **caractérisé en ce que** la tête en forme de marteau (62) de la pièce de liaison (6) est configurée pour l'essentiel en forme de losange.
